# EUROPEAN PATENT APPLICATION

(11) **EP 3 995 680 A1**
(43) Date of publication of application: **11.05.2022**
(21) Application number: 21201782.6
(22) Date of filing: 08.10.2021
(51) Int. Cl.: F02C 7/266, F02C 7/264, F23R 3/00

(54) **TEMPERATURE SENSING FOR TORCH IGNITION SYSTEMS**

(30) Priority: 04.11.2020 US 202017089262
(71) Applicant: Collins Engine Nozzles, Inc., West Des Moines, IA 50265 (US)
(72) Inventor: RYON, Jason A., deceased (US); PROCIW, Lev A., Johnston, 50131 (US); WILLIAMS, Brandon Phillip, West Des Moines, 50265 (US); SEEI, Roger A., West Des Moines, 50063 (US)
(74) Representative: Dehns

(57) **Abstract**

An embodiment of a system for measuring fuel ignition within a torch igniter (10) for a combustor in a gas turbine engine includes a housing surrounding and defining a combustion chamber (16), a first glow plug (26) received through the housing, and control circuitry. An innermost end of the first glow plug (26) extends into the combustion chamber (16) while an outermost end opposite the innermost end extends away from the combustion chamber (16). The control circuitry is connected to the outermost end of the glow plug (26) and is configured to measure a temperature of the innermost end of the glow plug (26) based on electrical resistance of the glow plug (26). The control circuitry is further configured to determine an operational parameter of the torch igniter (10) based on the temperature.

## Description

### BACKGROUND

The present disclosure relates to gas turbine engines and, more particular, to heat sensing devices and methods suitable for use in torch igniters used in the combustor section of a gas turbine engine.

Torch igniters can be used in lieu of spark igniters to provide an ignition source for combustors located in gas turbine engines. Torch igniters provide a flame to the combustion chamber of a gas turbine engine as an ignition source rather than the electric current provided by spark igniters. Consequently, torch igniters can provide a larger target for fuel injectors within the combustor, allowing for utilization of a greater range of fuel injector designs. Torch ignitors are intended to remain active while the gas turbine is operating, which lead to eventual material wear and degradation. Due to their location in a gas turbine engine, torch igniters can experience temperatures exceeding 3000-4000°F. Thus, any sensor scheme intended to detect improper operation of a torch igniter must be able to survive these temperature conditions.

### SUMMARY

The present disclosure provides an embodiment of a system for measuring fuel ignition within a torch igniter for a combustor in a gas turbine engine that includes housing surrounding and defining a combustion chamber, a first glow plug received through the housing, and control circuitry. An innermost end of the first glow plug extends into the combustion chamber while an outermost end opposite the innermost end extends away from the combustion chamber. The control circuitry is connected to the outermost end of the glow plug and is configured to measure a temperature of the first end of the glow plug based on electrical resistance of the glow plug. The control circuitry is further configured to determine an operational parameter of the torch igniter based on the temperature.

The present disclosure additionally provides a method of measuring fuel ignition within a torch igniter for a combustor in a gas turbine engine that includes creating a flame within a combustion volume of the torch igniter, measuring electrical resistance of a first glow plug after creating the flame, generating a temperature value for an innermost end of the glow plug based on the measured electrical resistance, and determining an operational parameter of the torch igniter based on the temperature value. The first glow plug is received through a housing that defines the combustion chamber. The innermost end of the first glow plug extends into the combustion chamber within the torch igniter. The glow plug also has an outermost end opposite the first that extends away from the combustion chamber. Control circuitry generates the temperature value and determines the operational parameter.

### BRIEF DESCRIPTION OF THE DRAWINGS

FIG. 1 is a cross-sectional view of an example of torch igniter within the combustion section of a gas turbine engine.
FIG. 2A is a cross-sectional view of an example of a housing for a glow plug.
FIG. 2B is a cutaway view of an example of a housing for a glow plug showing a cooling arrangement for the housing.
FIG. 3 is a block diagram of an example of a control system for measuring temperature within a torch igniter.
FIG. 4 is a flow diagram of an example of a method of operating and of determining an operational parameter of a torch igniter housed in the combustor section of a gas turbine engine.

### DETAILED DESCRIPTION

The present disclosure presents structures and methods for sensing conditions within the combustion chamber of a torch igniter suitable for igniting the combustor of a gas turbine engine. Advantageously, these structures and methods use a hot surface igniter, such as a glow plug, both to initiate combustion within the torch igniter and to sense temperature within the torch igniter. The temperature information collected using the hot surface igniters can indicate, for example, the presence of combustion within the torch igniter, the occurrence of a blow out, material degradation of the hot surface ignitor itself, and/or other fault conditions or improper operations of the torch igniter. Thus, the configurations disclosed herein allow the monitoring of a suite of operational parameters of the torch igniter without the need for any additional sensors.

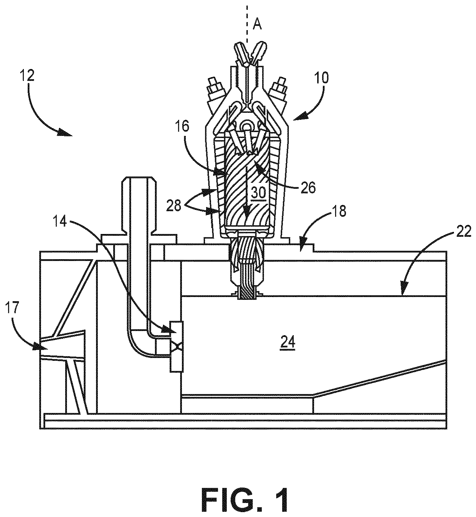

FIG. 1 is a cross-sectional view of torch igniter 10 disposed within combustor section 12 of a gas turbine engine. Torch igniter 10 is mounted orthogonally to the direction of a fuel injection from fuel nozzle 14, such that combustion chamber 16 of torch igniter 10 is located outside of high-pressure case 18 while the tip of torch igniter 10 is mounted through combustor liner 22 of combustor 24. The example of torch igniter 10 in FIG. 1 is shown as having glow plugs 26. Glow plugs 26 are used to ignite fuel and create combustion within torch igniter 10, creating a flame that can be used to ignite combustion within combustor 24.

The radial extent of combustion chamber 16 is defined by an igniter wall, which is coaxial with and surrounded by a structural wall. In the illustrated example, the igniter wall functions to house combustion within torch igniter 10, while the structural wall protects torch igniter 10 from high-pressure conditions in the combustor section. Generally, torch igniter 10 is arranged such that it possesses a tip section, a combustion section, and a cap section which are all oriented about axis A. Arrow 30 shows the general direction of flow within the interior volume of torch igniter 10. Thus, torch igniter 10 has upstream and downstream ends oriented along axis A and according to the direction of arrow 30. Combustion chamber 16 is fluidly connected to an outlet passage defined by the igniter wall in the region of the tip. It is through the outlet passage that a flame generated by combustion in combustion chamber 16 is emitted into the interior of combustor 24. To this extent, the cap is disposed at the upstream end of torch igniter 10 and the tip is disposed at the downstream end of torch igniter 10. It should be understood, however, that the tip may be disposed at any suitable location on the downstream end of torch igniter 10, including any location not coaxial with axis A.

In operation, air flows into high-pressure case 18 from a compressor section of the gas turbine engine via inlet 17. Torch igniter 10 then intakes high-pressure air from the inside of high-pressure case 18 via an inlet disposed in the tip of torch igniter 10. The high-pressure air is channeled through cooling channel 28 to cool an igniter wall of combustion chamber 16 before it is channeled into combustion chamber 16 to be used in combustion within torch igniter 10. Combustion chamber 16 is in fluid communication with an internal volume of combustor 24 via an outlet within the tip, allowing a flame created by combustion within torch igniter 10 to reach the interior of combustor 24 and thereby ignite fuel within combustor 24.

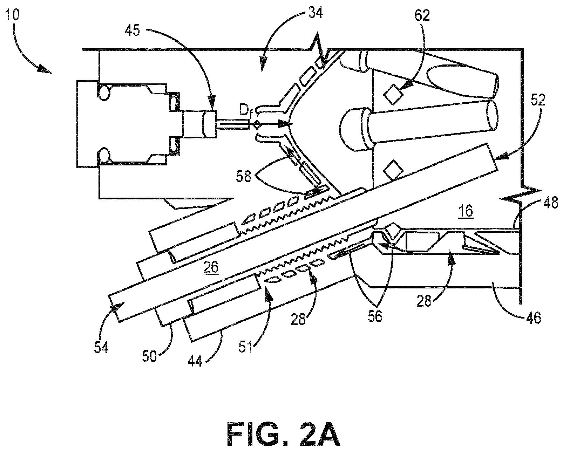

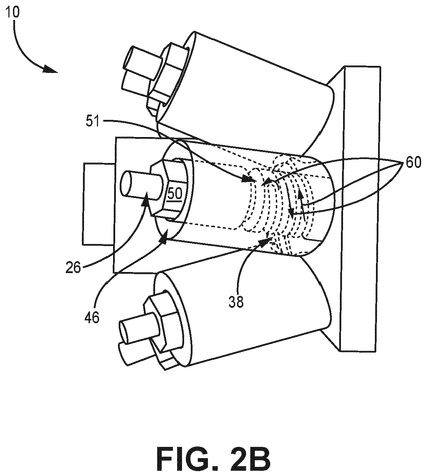

FIGS. 2A and 2B are cross-sectional and cutaway views, respectively, of a glow plug housed in torch igniter 10. Generally, glow plug 26 is mounted to cap section 34 via glow plug housing 44 and is connected to a power source capable of delivering electric current and thereby resistively heating glow plugs 26 at its external ends. Glow plug housing 44 extends through structural wall 46 and igniter wall 48 of torch igniter 10 and thereby allows glow plug 26 to extend into combustion chamber 16. Glow plug 26 is formed of a material capable of being non-destructively resistively heated. For example, glow plug 26 can be formed of a ceramic material, such as silicon nitride. More than one glow plug 26 may be mounted to cap section 34 at more than one glow plug housing 44 location. The multiple glow plugs may be connected to more than one power source or may be connected in a series, parallel, or combination arrangement to a single power source.

In the example depicted in FIGS. 2A and 2B, glow plug 26 is attached to sheath 50, which is removably attached to glow plug housing 44. Sheath 50 has a generally annular structure and surrounds the portion of glow plug 26 extending through glow plug housing 44. Further, sheath 50 is removably mounted to glow plug housing 44 via a screw attachment at receiver portion 51 of glow plug housing 44. Sheath 50 may be attached non-removably to glow plug 26, such as by brazing, or may be removably attached by suitable means. Sheath 50 is depicted as being mounted to glow plug housing 44 by a screw attachment, though it should be understood any suitable connection may be used. Likewise, sheath 50 may be non-removably attached, such as by brazing or welding, or glow plug 26 may be attached directly to glow plug housing 44.

Glow plug 26 has interior end 52 and exterior end 54. Interior end 52 extends through structural wall 46 and igniter wall 48 via glow plug housing 44 and into combustion chamber 16. In operation, glow plug 26 is resistively heated such that interior end 52 is sufficiently hot to ignite fuel. Fuel injector 45 is configured to inject a fuel-air mixture in direction D_{f} that impinges on interior end 52. Fuel injected toward the hot surface of glow plug 26 ignites and initiates combustion in torch igniter 10.

Torch igniter 10 causes combustion within combustion chamber 16 by using fuel injector 45 to inject a fuel-air mixture onto the surface of glow plug 26. Glow plug 26 extends through cap section 34, such that it has an internal end and an external end. Further, glow plug 26 can be resistively heated such that it is able to ignite the fuel-air mixture injected by fuel injector 45. Fuel injector 45 generally injects the fuel-air mixture in a conical volume centered on axis A that impinges on the internal end of glow plug 26. To improve fuel ignition of the mixture injected by fuel injector 45, torch igniter 10 may include more than one glow plug 26. For example, torch igniter 10 can in some embodiments be equipped with six glow plugs 26 distributed circumferentially, and in some cases symmetrically, about cap section 34.

During operation, glow plug housing 44 and sheath 50 can experience significant heat loads. In examples where glow plug housing 44 or sheath 50 is made of a metallic material, the heat exposure can cause material degradation of the metallic material. Cooling air delivered through channel 28 is used to cool glow plug housing 44 and sheath 50. As it extends through glow plug housing 44, channel 28 forms a helical flow path between an exterior portion of structural wall 46 and an interior portion of wall 46 adjacent to sheath 50. Arrows 56, 58, and 60 indicate the flow path of cooling air through channel 28 in glow plug housing 44. It should be understood however, that channel 28 may form any suitable structure to cool glow plug housing 44 and sheath 50.

As shown in FIG. 2A, air flows from an air inlet toward cap section 34, as indicated by arrows 56. The air is turned to flow outward toward the outermost portion of receiver portion 51 and then is turned to flow inward toward the interior of combustion chamber 16. The flow of cooling air is turned again to flow toward an upstream end of cap section 34, as indicated by arrows 58.

FIG. 2B shows a cutaway view of the flow path of cooling channel 28 through glow plug housing 44. As shown by arrows 60, channels 28 form a flow path that first flows air outward toward exterior end 54 through a helical section. Air is turned at the outermost end of receiver portion 51 before it flows inward toward interior end 52 through a second helical section. The two helical sections of channels 28 form a double-helical structure.

Cooling air exits channel 28 via air swirl holes 62, which extend through igniter wall 48 and fluidly connect channel 28 to combustion chamber 16. Air swirl holes 62 feed cooling air into combustion chamber 16 at an upstream position of interior end 52, allowing air fed through holes 68 to be consumed during combustion in combustion chamber 16. Advantageously, torch igniter 10 is configured such that all cooling air passing through channel 28 is used for combustion in combustion chamber 16 and ultimately feeds into combustor 24. This configuration prevents downstream thermal stress that could result from allowing the cooling air to bypass the combustor section.

In the depicted embodiment, air swirl hole 62 is positioned upstream of interior end 52. Positioning air swirl hole 62 at an upstream location of combustion chamber 16 advantageously allows air exiting swirl hole 62 can be used to create a self-sustaining flame. Specifically, the depicted position and previously described transverse orientation of air swirl hole 70 allows air exiting air swirl hole 70 to create a recirculation zone within combustion chamber 16. The recirculation zone creates a low-pressure zone along the centerline of axis A-A and allows for upstream flow of combustion gases along the perimeter of combustion chamber 16. Upstream-flowing combustion gases are heated from the combustion reaction, allowing them to evaporate fuel injected by fuel injector 44 and thereby perpetuate combustion. In examples where torch igniter 10 can create a self-sustaining flame, glow plugs 26 do not have to be resistively heated during the entire operation of torch igniter 10. Rather, glow plugs 26 can be resistively heated only to create an initial ignition of fuel within combustion chamber 16 and then their resistive heating can be stopped glow plugs 26 can remain inactive during continuous operation, with additional air supplied by air swirl hole 62 and fuel supplied by fuel injector 45 perpetuating combustion inside combustion chamber 16.

Generally, torch igniter 10 operates continuously during the entire operation time of the gas turbine engine in which it is located. Continuous operation allows torch igniter 10 to easily facilitate altitude re-lights of combustor 24 by acting as a pilot light for fuel ignition within combustor 24. Further, creating a self-sustaining flame allows for the continuous operation of torch igniter 10 during the course of operation of the gas turbine engine without requiring continuous resistive heating of glow plugs 26. Further, torch igniter 10 can also suffer from blow outs, including those that occur while combustor 24 is not lit and air taken in by torch igniter 10 is at low pressure. Torch igniter 10 can be sized to be sufficiently large such that combustion can occur within combustion chamber 16 when air taken in by torch igniter 10 for combustion is at a relatively low-pressure, such as while combustor 24 is not lit.

In at least some examples, torch igniter 10, including glow plug sheath 50, is formed monolithically. More generally, all components of torch igniter 10 can be formed partially or entirely by additive manufacturing. For metal components (e.g., Inconel, aluminum, titanium, steel, etc.) exemplary additive manufacturing processes include but are not limited to powder bed fusion techniques such as direct metal laser sintering (DMLS), laser net shape manufacturing (LNSM), electron beam manufacturing (EBM). For polymer or plastic components, stereolithography (SLA) can be used. Support-free additive manufacturing techniques, such as binder jetting, can also be used to form components of any torch igniter disclosed herein. Additive manufacturing is particularly useful in obtaining unique geometries (e.g., channel 28) and for reducing the need for welds or other attachments (e.g., glow plug housing 44 and cap section 34). However, other suitable manufacturing process can be used. For example, any or part of the tip, dome, and combustion sections of torch igniter 10 can in some examples be fabricated separately and joined via later manufacturing steps (e.g., brazing, welding, or compression fitting) to form torch igniter 10.

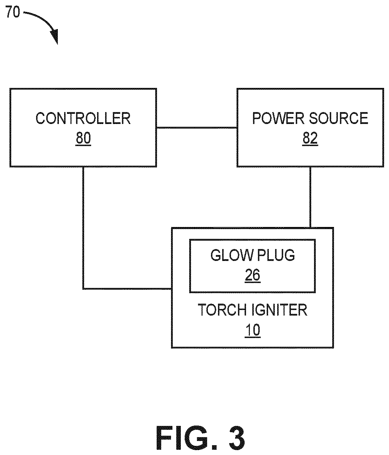

FIG. 3 is a block diagram of control system 70 used for controlling the resistive heating of glow plug 26 and for measuring temperature conditions within torch igniter 10. The resistive heating of glow plugs 26 is controlled via controller 80. Controller 80 is an electronic controller, such as an engine control unit (ECU) of a full authority digital engine control (FADEC). In operation, controller 80 is capable of controlling the delivery of electricity to each glow plug 26 from power source 82 such that glow plugs 26 can be resistively heated selectively and to varying degrees. In order to protect controller 80 from the high internal temperatures of torch igniter 10, controller 80 is generally located outside of torch igniter 10.

In some examples, controller 80 can include one or more processors and computer-readable memory encoded with instructions that, when executed by the one or more processors, cause controller 80 and/or other elements of control system 70 to operate in accordance with techniques described herein.

Computer-readable memory of controller 80 can be configured to store information within controller 80 during operation. Computer-readable memory, in some examples, can be described as a computer-readable storage medium. In some examples, a computer-readable storage medium can include a non-transitory medium. The term "nontransitory" can indicate that the storage medium is not embodied in a carrier wave or a propagated signal. In certain examples, a non-transitory storage medium can store data that can, over time, change (e.g., in RAM or cache). In some examples, computer-readable memory of controller 80 can include temporary memory, meaning that a primary purpose of the computer-readable memory is not long-term storage. Computer-readable memory of controller 80, in some examples, can be described as a volatile memory, meaning that the computer-readable memory does not maintain stored contents when electrical power to controller 80 is removed. Examples of volatile memories can include random access memories (RAM), dynamic random access memories (DRAM), static random access memories (SRAM), and other forms of volatile memories. In some examples, computer-readable memory can be used to store program instructions for execution by one or more processors of controller 80. For instance, computer-readable memory of controller 80 can be used by software or applications executed by controller 80 to temporarily store information during program execution.

Advantageously, controller 80 can be configured to measure the electrical resistance of glow plug 26. As resistance of a material generally varies with the temperature of the material, the resistance of the current flowing through glow plug 26 generally corresponds to the temperature of glow plug 26. Controller 80 generally correlates sensed resistance to one or more events, described in detail below, such as active operation of the torch igniter or material degradation of glow plug 26. In operation, controller 80 utilizes glow plug 26 to measure internal temperature of combustion chamber 16 when torch igniter 10 has created a self-sustaining flame. Glow plug 26 can be used to measure the temperature of combustion in combustion chamber 16 via interior end 52, which extends into combustion chamber 16 downstream of fuel injector 45. Thus, glow plug 26 is positioned so that it can be used to accurately determine temperature conditions within combustion chamber 16.

Temperature information inferred from the resistivity of glow plug 26 can be used by controller 80 for several advantageous purposes. Most notably, the temperature of glow plug 26 can indicate that a flame is present in torch igniter 10. As such, controller 80 can be connected to a user interface to confirm to a user of control system 70 that torch igniter 10 operates continuously for the duration of the operating time of the gas turbine engine. Further, controller 80 can use the temperature information to determine if a sudden blow out of torch igniter 10 has occurred. For example, a sudden drop in temperature within torch igniter 10 may indicate a blow out of the self-sustaining flame in torch igniter 10. Controller 80 can be configured to recognize a blow-out event and to responsively heat glow plug 26 to restart combustion.

Controller 80 can also use the temperature information to determine the maximum current that can be supplied by power source 82 to resistively heat glow plug 26. Generally, the amount of current supplied to glow plug 26 by power source 82 is limited to prevent thermal damage to glow plug 26 from excessive resistive heating of glow plug 26. However, if glow plug 26 is at a sufficiently low temperature, additional current can be supplied by power source 82 without damaging glow plug 26. Controller 80 can be configured to detect that the temperature of glow plug 26 is below a pre-determined threshold and to subsequently supply additional current so that glow plug 26 can be more rapidly resistively heated.

Further, glow plug 26 may degrade over time. Controller 80 can also be configured to measure the resistivity of glow plug 26 over a longer period of time, such as multiple operations of the gas turbine engine, and to store the resistivity information in a computer readable memory. Controller 80 can then compare the stored resistivity information to determine if the resistive material used to form glow plug 26 has degraded. For example, after the changed resistance of glow plug 26 has matched or exceeded a pre-determined threshold, controller 80 can communicate to a user that glow plug 26 requires replacement or repair via, for example, a user interface device or display.

Some examples of torch igniter 10 are constructed with more than one glow plug 26. In the example of torch igniter 10 depicted in FIGS. 1, 2A, and 2B, torch igniter 10 is configured to house six glow plugs 26, thereby providing controller 80 with up to six different temperature readings. Among other advantages, this improves redundancy of temperature sensing in combustion chamber 16. Improved redundancy allows for controller 80 to accurately determine combustion temperatures despite failure of one or more glow plugs 26. Similarly, temperature readings from multiple glow plugs 26 can be compared for fault detection. For example, a glow plug 26 measuring a temperature that is significantly inconsistent with the measurements from other glow plugs 26 may indicate a fault and allow controller 80 to signal to a user that the defective glow plug 26 is in need of replacement.

Further, in these examples, controller 80 can selectively measure the resistance and resistively heat each glow plug 26 individually. This allows controller 80 to, for example, selectively resistively heat one or more glow plugs 26 to initiate combustion while monitoring temperature using one or more glow plugs that are not being resistively heated, allowing controller 80 to monitor the ignition process in real-time. However, controller 80 can also be configured to measure the series resistance of multiple glow plugs connected in a series.

Moreover, controller 80 can use the three-dimensional position data for each glow plug to generate three-dimensional temperature data. This three-dimensional temperature data can be used to determine if sections of torch igniter 10 have been damaged or are otherwise operating improperly. For example, an asymmetric temperature distribution may indicate a bias in fuel delivery from fuel injector 45 caused by damage or coking of fuel injector 45. However, it should be understood that torch igniter 10 may have any suitable number of glow plugs. Controller 80 can use the three-dimensional temperature data to alert a user of control system 70 to a detected an error or irregularity in torch igniter 10 via, for example, a user interface device or display. Alternatively, controller 80 can output three-dimensional temperature data directly to a user interface device or display for the benefit of a user seeking to diagnose damage to or improper operation of torch igniter 10.

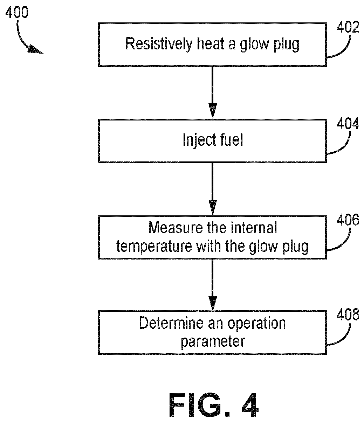

FIG. 4 is an example of method 400 of operating a torch igniter and of determining an operational parameter of a torch igniter housed in the combustor section of a gas turbine engine. Method 400 can be performed by an electronic controller, such as controller 80 of control system 70. Method 400 has steps of heating a glow plug resistively (step 402), injecting fuel to ignite the torch igniter (step 404), measuring the temperature inside the torch igniter using the glow plug (step 406), and using the temperature to determine an operational parameter of the torch igniter (step 408).

In step 402, a glow plug extending into a combustion chamber of a torch igniter is resistively heated. The glow plug is formed of material capable of being resistively heated, such as silicon nitride. Generally, the resistive heating of the glow plug is controlled by a controller, such as an ECU or FADEC. The controller can cause the glow plug to be resistively heated selectively and to varying degrees.

After the glow plug is resistively heated to a temperature that is capable of causing ignition of fuel, an injector injects fuel onto a surface of the glow plug in step 404. Contact of the fuel with the surface of the glow plug initiates combustion within a combustion chamber of the torch igniter. The flame of the torch igniter can then be utilized to ignite fuel within a combustor of the gas turbine engine. In some examples, the resistive heating of the glow plug is stopped following the initial ignition event and the flame of the torch igniter becomes self-sustaining through the periodic or continuous addition of additional fuel and air to the torch igniter's combustion chamber.

In step 406, the electrical resistance of the glow plug is measured. Generally, the controller measures the electrical resistance of the glow plug. The controller then uses the measured resistivity to determine the temperature of the combustion chamber of the torch igniter. The controller can store electrical resistance data from proper operation of the torch igniter and compare the measured electrical resistance to determine if the torch igniter is operating at a cooler than expected temperature, possibly indicating a problem with the torch igniter. Alternatively, the controller may calculate a real temperature value from the electrical resistance. Step 406 can optionally be performed after the resistive heating of the glow plug has ceased, allowing the resistivity of the glow plug to correspond to the internal temperature of the combustion chamber.

In step 408, the temperature information is used to determine an operational parameter of the torch igniter. The operational parameter can be, for example, initiation of combustion within the torch igniter, the degradation of a glow plug, the occurrence of a blow out, or the existence of a self-sustaining flame during continuous operation of the torch igniter. The operational parameter can be communicated to a user of a system performing method 400 by a user interface or display. Further, in the case of a blow-out, a control system performing method 400, such as control system 70, can be configured to automatically begin the process of re-lighting the torch igniter.

Further, step 406 may be performed subsequently to step 404 or simultaneously to step 404 in examples of a torch igniter having multiple glow plugs. In these examples, method 400 can be adapted to generate three-dimensional temperature information for the interior of the torch igniter from the temperatures and positions of the glow plugs by performing step 406 for each glow plug. Step 408 can be similarly adapted to determine operational parameters of the torch igniter from the three-dimensional temperature information.

Examples of torch igniters having multiple glow plugs also allow for improved redundancy in temperature sensing. Improved redundancy allows for combustion temperatures to be measured accurately despite failure of one or more glow plugs. Similarly, temperature readings from multiple glow plugs can be compared for fault detection. For example, a glow plug measuring a temperature that is significantly inconsistent with the measurements from other glow plugs may indicate that the glow plug is faulty and needs replacement.

Furthermore, in examples of a torch igniter having multiple glow plugs, steps of method 400 can be performed by different glow plugs. For example, one or more of the multiple glow plugs can be heated resistively (step 402) and used to ignite fuel (step 404). Simultaneously, another glow plug can be used to measure temperature (406). This allows for real-time measurement of temperature, and therefore real-time determination of an operational parameter of the torch igniter, during ignition of the torch igniter, for example.

### Discussion of Possible Embodiments

The following are non-exclusive descriptions of possible embodiments of the present invention.

An embodiment of a system for measuring fuel ignition within a torch igniter for a combustor in a gas turbine engine includes a housing surrounding and defining a combustion chamber a glow plug received through the housing, and control circuitry. An innermost end of the first glow plug extends into the combustion chamber while an outermost end opposite the innermost end extends away from the combustion chamber. The control circuitry connected to the outermost end of the glow plug. The control circuitry is further configured to measure a temperature of the innermost end of the glow plug based on electrical resistance of the glow plug and determine an operational parameter of the torch igniter based on the temperature.

The system of the preceding paragraph can optionally include, additionally and/or alternatively, any one or more of the following features, configurations and/or additional components:

A system for measuring fuel ignition within a torch igniter for a combustor in a gas turbine engine according to an exemplary embodiment of this disclosure, among other possible things includes a housing surrounding and defining a combustion chamber a glow plug received through the housing, and control circuitry. An innermost end of the first glow plug extends into the combustion chamber while an outermost end opposite the innermost end extends away from the combustion chamber. The control circuitry connected to the outermost end of the glow plug. The control circuitry is further configured to measure a temperature of the innermost end of the glow plug based on electrical resistance of the glow plug and determine an operational parameter of the torch igniter based on the temperature.

A further embodiment of the foregoing system, wherein the glow plug is connected to a power source at the outermost end and the power source is configured to resistively heat the glow plug.

A further embodiment of any of the foregoing systems, wherein the control circuitry is disposed outside of the gas turbine engine.

A further embodiment of any of the foregoing systems, wherein the control circuitry is configured to measure the temperature of the innermost end of the glow plug when the glow plug is not being resistively heated.

A further embodiment of any of the foregoing systems, wherein control circuitry is further configured to control the resistive heating of the glow plug.

A further embodiment of any of the foregoing systems, further comprising a second glow plug received through the housing.

A further embodiment of any of the foregoing systems, wherein the first and second glow plugs are disposed at first and second locations A further embodiment of any of the foregoing systems, wherein the second glow plug has an innermost end that extends into the combustion chamber and an outermost end that extends away from the combustion chamber and the outermost end is connected to the control circuitry.

A further embodiment of any of the foregoing systems, the control circuitry is configured to measure a second temperature of the innermost end of the second glow plug based on the electrical resistance of the second glow plug.

A further embodiment of any of the foregoing systems, wherein the control circuitry is further configured to generate three-dimensional temperature information based on the first and second temperatures and the first and second of locations.

A further embodiment of any of the foregoing systems, wherein the control circuitry is configured to cause the resistive heating of the first glow plug and to measure only the second temperature using only the second glow plug.

A further embodiment of any of the foregoing systems, further comprising a third glow plug received through the housing.

A further embodiment of any of the foregoing systems, wherein the third glow plug is disposed at a third location.

A further embodiment of any of the foregoing systems, wherein the third glow plug has an innermost end that extends into the combustion chamber and an outermost end that extends away from the combustion chamber and the outermost end is connected to the control circuitry.

A further embodiment of any of the foregoing systems, wherein the control circuitry is configured to measure a third temperature of the innermost end of the third glow plug based on the electrical resistance of the third glow plug.

A further embodiment of any of the foregoing systems, wherein the glow plug comprises a silicon nitride rod.

A further embodiment of any of the foregoing systems, wherein the operational parameter indicates whether a material of the first glow plug has degraded.

A further embodiment of any of the foregoing systems, wherein the operational parameter indicates whether a blow out of the torch igniter has occurred.

A further embodiment of any of the foregoing systems, wherein the first glow plug is made of a ceramic material and is attached to a metal sheath.

An embodiment of a method of measuring fuel ignition within a torch igniter for a combustor in a gas turbine engine includes creating a flame within a combustion volume of the torch igniter, measuring electrical resistance of a glow plug after creating the flame, generating a temperature value for the first end based on the measured electrical resistance, and determining an operational parameter of the torch igniter based on the temperature value. The glow plug is received through a housing that defines the combustion chamber, and has an innermost end extending into the combustion chamber within the torch igniter and an outermost end opposite the innermost end and extending away from the combustion chamber. Control circuitry generates the temperature value and determines the operational parameter.

The method of the preceding paragraph can optionally include, additionally and/or alternatively, any one or more of the following features, configurations and/or additional components:

A method of measuring fuel ignition within a torch igniter for a combustor in a gas turbine engine according to an exemplary embodiment of this disclosure, among other possible things includes creating a flame within a combustion volume of the torch igniter, measuring electrical resistance of a glow plug after creating the flame, generating a temperature value for the first end based on the measured electrical resistance, and determining an operational parameter of the torch igniter based on the temperature value. The glow plug is received through a housing that defines the combustion chamber, and has an innermost end extending into the combustion chamber within the torch igniter and an outermost end opposite the innermost end and extending away from the combustion chamber. Control circuitry generates the temperature value and determines the operational parameter.

A further embodiment of the foregoing method, wherein the operational parameter indicates corrosion of the glow plug.

A further embodiment of any of the foregoing methods, wherein the operational parameter indicates a blow out of the flame.

A further embodiment of any of the foregoing methods, wherein the flame is a self-sustaining flame.

A further embodiment of any of the foregoing methods, further comprising resistively heating the glow plug, impinging fuel onto a surface of the resistively heated glow plug to ignite the fuel to create the flame, halting the resistive heating of the glow plug prior to measuring the electrical resistance of the glow plug.

A further embodiment of any of the foregoing methods, further comprising measuring a second electrical resistance of a second glow plug after creating the flame, wherein the second glow plug is received through a housing that defines the combustion chamber.

A further embodiment of any of the foregoing methods, further comprising generating, by the control circuitry, a second temperature value for the innermost end based on the measured second electrical resistance.

A further embodiment of any of the foregoing methods, further comprising determining, by the control circuitry, the operational parameter of the torch igniter based on the first and second temperatures.

A further embodiment of any of the foregoing methods, wherein the first and second glow plugs are disposed at first and second locations.

A further embodiment of any of the foregoing methods, further comprising determining, by the control circuitry, three-dimensional temperature information based on the first and second locations and the first and second temperatures.

A further embodiment of any of the foregoing methods, further comprising determining the operational parameter of the torch igniter based on the three-dimensional temperature information.

A further embodiment of any of the foregoing methods, further comprising generating, by the control circuitry, three-dimensional information about the torch igniter based on the plurality of operational parameters and the plurality of locations.

A further embodiment of any of the foregoing methods, further comprising resistively heating the second glow plug and impinging fuel onto a surface of the second glow plug.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for measuring fuel ignition within a torch igniter (10) for a combustor in a gas turbine engine, the system comprising:
a housing surrounding and defining a combustion chamber (16);
a first glow plug (26) received through the housing, and such that an innermost end of the first glow plug extends into the combustion chamber while an outermost end opposite the innermost end extends away from the combustion chamber; and
control circuitry connected to the outermost end of the first glow plug, wherein the control circuitry is configured to:
measure a first temperature of the innermost end of the first glow plug based on electrical resistance of the first glow plug; and
determine an operational parameter of the torch igniter based on the first temperature.

2. The system of claim 1, wherein the first glow plug (26) is connected to a power source (82) at the outermost end and the power source is configured to resistively heat the first glow plug.

3. The system of claim 2, wherein the control circuitry is disposed outside of the gas turbine engine; and/or
wherein the control circuitry is configured to measure the first temperature of the innermost end of the first glow plug (26) when the first glow plug is not being resistively heated.

4. The system of any preceding claim, wherein the control circuitry is further configured to control the resistive heating of the first glow plug (26).

5. The system of any preceding claim, further comprising a second glow plug (26) received through the housing, wherein:
the first and second glow plugs (26) are disposed at first and second locations;
the second glow plug (26) has an innermost end that extends into the combustion chamber and an outermost end that extends away from the combustion chamber;
the outermost end is connected to the control circuitry; and
the control circuitry is configured to measure a second temperature of the innermost end of the second glow plug based on the electrical resistance of the second glow plug.

6. The system of claim 5, wherein the control circuitry is further configured to generate three-dimensional temperature information based on the first and second temperatures and the first and second of locations; and/or
wherein the control circuitry is configured to cause the resistive heating of the first glow plug and to measure only the second temperature using only the second glow plug..

7. The system of claim 5, further comprising a third glow plug (26) received through the housing, wherein:
the third glow plug is disposed at a third location;
the third glow plug has an innermost end that extends into the combustion chamber and an outermost end that extends away from the combustion chamber;
the outermost end is connected to the control circuitry; and
the control circuitry is configured to measure a third temperature of the innermost end of the third glow plug based on the electrical resistance of the third glow plug.

8. The system of any preceding claim, wherein the first glow plug (26) comprises a silicon nitride rod.

9. The system of any preceding claim, wherein the operational parameter indicates whether a material of the first glow plug has degraded; and/or
wherein the operational parameter indicates whether a blow out of the torch igniter (10) has occurred.

10. The system of any preceding claim, wherein the first glow plug (26) comprises a ceramic material and is attached to a metal sheath.

11. A method of measuring fuel ignition within a torch igniter for a combustor in a gas turbine engine, the method comprising:
creating a flame within a combustion volume of the torch igniter;
measuring electrical resistance of a first glow plug after creating the flame, wherein the first glow plug is received through a housing that defines the combustion chamber and the first glow plug has an innermost end extending into the combustion chamber within the torch igniter and an outermost end opposite the innermost end and extending away from the combustion chamber;
generating, by control circuitry, a first temperature value for the innermost end based on the measured electrical resistance; and
determining, by the control circuitry, an operational parameter of the torch igniter based on the first temperature value.

12. The method of claim 11, wherein the operational parameter indicates degradation of the first glow plug; and/or
wherein the operational parameter indicates a blow out of the flame.

13. The method of claim 11 or 12, further comprising:
resistively heating the first glow plug;
impinging fuel onto a surface of the resistively heated first glow plug to ignite the fuel to create the flame;
halting the resistive heating of the first glow plug prior to measuring the electrical resistance of the first glow plug.

14. The method of any of claims 11-13, further comprising:
measuring a second electrical resistance of a second glow plug after creating the flame, wherein the second glow plug is received through a housing that defines the combustion chamber, the second glow plug has an innermost end extending into the combustion chamber within the torch igniter and an outermost end opposite the innermost end and extending away from the combustion chamber;
generating, by the control circuitry, a second temperature value for the innermost end based on the measured second electrical resistance; and
determining, by the control circuitry, the operational parameter of the torch igniter based on the first and second temperatures, and preferably
wherein the first and second glow plugs are disposed at first and second locations and further comprising generating, by the control circuitry, three-dimensional information based on the first and second locations and the first and second temperatures.

15. The method of any of claims 11-14, further comprising:
resistively heating a second glow plug having an innermost end extending into the combustion chamber within the torch igniter and an outermost end opposite the innermost end and extending away from the combustion chamber; and
impinging fuel onto a surface of the resistively heated second glow plug to ignite the fuel to create the flame.
